# EUROPÄISCHE PATENTSCHRIFT

(11) **EP 3 953 601 B1**
(45) Veröffentlichungstag und Bekanntmachung des Hinweises auf die Patenterteilung: **27.05.2026**
(21) Anmeldenummer: 20722481.7
(22) Anmeldetag: 09.04.2020
(51) Int. Cl.: F16D 65/097

(54) **VORRICHTUNG ZUR RÜCKSTELLUNG VON BREMSBELÄGEN UND SCHEIBENBREMSE**
DEVICE FOR PAD RETURN AND DISC BRAKE
APPAREIL POUR RETOURNER UNE PLAQUE D'UN FREIN À DISQUE ET FREIN À DISQUE

(30) Priorität: 10.04.2019 DE 102019109498
(43) Veröffentlichungstag der Anmeldung: 16.02.2022
(73) Patentinhaber: Haldex Aktiebolag, 261 24 Landskrona (SE)
(72) Erfinder: WELIN, Hans, 26013 Sankt Ibb (SE); STENSSON, Göran, 27531 Sjöbo (SE)
(74) Vertreter: Müller Schupfner & Partner Patent- und Rechtsanwaltspartnerschaft mbB (Muc)
(86) Internationale Anmeldenummer: PCT/EP2020/060265
(87) Internationale Veröffentlichungsnummer: WO 2020/208194

(56) Entgegenhaltungen:
- EP-A2- 2 050 978
- EP-B1- 2 831 457
- DE-A1- 102011 118 736
- DE-A1- 102015 107 956
- DE-U1- 202016 102 686
- JP-A- 2010 270 799
- JP-A- H07 280 004
- JP-U- H0 738 771
- US-A- 5 310 024
- US-A1- 2014 124 304

## Beschreibung

Die vorliegende Erfindung betrifft eine Vorrichtung zur Abstützung, Führung und Rückstellung einer Bremsbelaghalterplatte und eines Bremsbelags sowie entsprechend ausgestaltete Mechanismen hierfür.

Bei Gleitsattelbremsen bilden der Gleitsattel und der diesen verschieblich tragende Bremsträger quasi gemeinsam sogenannte Belagschächte aus, in die die Bremsbeläge von oben her einsetzbar sind. Dabei stützen sich die Rückplatte bzw. Bremsbelaghalterplatte der Bremsbeläge mit ihren Seiten an senkrechten Führungsflächen, den sogenannten Hörnern, des Bremsträgers verschieblich gleitend ab. Die Bremsbelaghalterplatten sind über in der Regel als Blattfedern ausgebildete Belagniederhaltefedern gegenüber einem Widerlagerelement abgestützt, das den Freiraum der Belagschächte des Bremssattels überbrückt.

Bei einer Bremsbetätigung wird bewirkt, dass der zuspannseitige Bremsbelag gegen die Bremsscheibe gedrückt wird, während als Reaktion darauf der gegenüberliegende Bremsbelag durch die gegengerichtete Gleitbewegung des Bremssattels ebenfalls an der Bremsscheibe zur Anlage kommt. Nach Ende des Bremsvorgangs müssen die Zuspanneinrichtung und die Bremsbeläge mit ihren Bremsbelaghalterplatten wieder in ihre jeweiligen Ausgangslagen zurück gebracht werden. Während für die Zuspanneinrichtung hierfür ein separater Rückstellmechanismus vorgesehen ist, bspw. eine zwischen der Zuspanneinrichtung und dem Bremssattel wirkende oder eine in diese bereits funktional integrierte Rückstellfeder, sind im Stand der Technik für die Bremsbeläge eigenständige Vorrichtungen vorgesehen worden, die zwischen der seitlichen Wand der Bremsschächte und den Bremsbelaghalterplatten wirken. Diese bestehen aus teilweise unter Vorspannung stehenden Federelementen, die sich bei Bremshub infolge der Relativbewegung zwischen der Bremsbelaghalterplatte und der Schachtwand elastisch verformen und so eine Rückstellkraft ausbilden, die bei Beendigung des Bremsvorgangs, wenn keine Bremskraft mehr wirkt, zum Tragen kommt und so die Bremsbelaghalterplatte unterstützt, sich zurückzubewegen.

Beispielhaft seien hier die Federmechanismen zwischen der Bremsbelaghalterplatte und den lateralen Führungsflächen des Belagschachts genannt, wie diese aus der EP 1 625 312 B1, der DE 196 23 867 C2 und der EP 2 644 926 B1 bekannt sind. Ein Federelement, das den Bremsbelag zu beiden Seiten teilweise umgreift, ist darüber hinaus aus der EP 2 831 457 B1 bekannt.

Eine Vorrichtung zur Abstützung und Führung einer Bremsbelaghalterplatte und eines auf dieser angeordneten Bremsbelags nach dem Oberbegriff des Anspruchs 1 offenbart die JP H07 280004 A. Eine diesbezügliche Brembelaghalterplatte ist auch in der DE 10 2015 107 956 A1 gezeigt.

Allen genannten Vorrichtungen zur Rückstellung, die teilweise auch als Rüttelschutz dienen können, ist gemeinsam, dass diese sich nur sehr aufwändig installieren lassen; insbesondere ist es nicht möglich, mit derartigen Federmechanismen versehene Bremsbelaghalterplatten auf einfache Art und Weise von oben widerstandslos und ohne Hindernisse in die Belagschächte einzusetzen. Darüber hinaus sind teilweise konstruktive Änderungen an den Seitenwänden des Belagschachts und/oder an der Bremsbelaghalterplatte selbst notwendig, um die Funktionalität dieser Federelemente überhaupt erst zu ermöglichen, wie beispielsweise Hinterschnitte erzeugende Ausnehmungen, die den Herstellungsaufwand noch zusätzlich erhöhen.

Hinzu kommt, dass die Federelemente nicht nur Rückstellkräfte erzeugen, die dann in Axialrichtung, d.h. im Wesentlichen parallel zu der Achse der Bremsscheibe wirken bzw. ausgerichtet sind, sondern teilweise auch tangentiale und/oder radiale Kräfte zwischen den seitlichen Wänden der Bremsträger und der Bremsbelaghalterplatten ausüben, die einer einwandfreien Rückstellung einen entsprechenden, unter Umständen nicht zu vernachlässigenden Widerstand entgegensetzen.

Ausgehend davon ist es eine Aufgabe der vorliegenden Erfindung, in Bezug auf den Rückstellvorgang der Bremsbeläge bei einer Scheibenbremse eine bessere Funktionalität bereitzustellen. Eine weitere Aufgabe besteht darin, eine Vorrichtung zur Rückstellung eines Bremsbelags zur Verfügung zu stellen, die einfach zu montieren und funktionssicher ist.

Gelöst werden diese Aufgaben u.a. mit einer Vorrichtung zur Abstützung, Führung und Rückstellung einer Bremsbelaghalterplatte mit einem auf dieser angeordneten Bremsbelag nach Anspruch 1, mit einer entsprechenden Bremsbelaghalterplatte nach Anspruch 9 und mit einer Bremsbelaghalterplatte nach Anspruch 12 sowie mit einer Belagniederhalterfeder nach Anspruch 13.

In einem ersten Aspekt schlägt die Erfindung daher eine Vorrichtung zur Abstützung und Führung einer Bremsbelaghalterplatte und eines auf dieser angeordneten Bremsbelags in einem Belagschacht einer Scheibenbremse vor, mit einer mit der Bremsbelaghalterplatte zusammenwirkenden Rückstelleinrichtung, die ausgebildet ist, bei einer infolge des Bremshubs vollführten Bewegung des Bremsbelags in Axialrichtung eine Rückstellkraft zu erzeugen, wobei die Rückstelleinrichtung aus einem ersten Rückstellelement, das ausgebildet und angeordnet ist, den unteren Bereich der Bremsbelaghalterplatte zurückzustellen, und aus einem davon getrennten, zweiten Rückstellelement besteht, das ausgebildet und angeordnet ist, den dem unteren Bereich gegenüberliegenden oberen Bereich der Bremsbelaghalterplatte zurückzustellen.

Hierbei bezieht sich Axialrichtung auf die Richtung der Bewegung der Bremsbeläge, folglich parallel zu der Achse der Bremsscheibe und in Richtung der aufgebrachten Zuspannkraft, wobei unter dem oberen Bereich der Bremsbelaghalterplatte derjenige Abschnitt gemeint ist, der nach oben zu der Öffnung des Bremsschachts im Bremssattel zeigt und an dem die Belagniederhaltefeder angreift, während der untere Bereich diesem Abschnitt gegenüberliegt.

Der Vorteil bei der Verwendung von zumindest zwei voneinander getrennten, für sich im Zusammenspiel mit der Bremsbelaghalterplatte und mit Widerlagern jeweils eigenständig wirkenden Rückstellelementen gemäß der Erfindung liegt darin, dass sich die Rückstellkräfte und damit das Rückstellverhalten besser einstellen lassen. Die beiden, als separate Bauteile konzipierten Rückstellelemente wirken jedes für sich und üben so jeweils eine eigene Rückstellkraft aus, sind vorzugsweise aber so aufeinander abgestimmt, dass diese so zusammenwirken, dass sie ein gemeinsames, vorallem über eine gleichförmige Kraftverteilung gleichmäßiges Rückstellen der Bremsbelaghalterplatte umsetzen.

Zur besseren Einstellung der resultierenden Rückstellkräfte kann es gemäß der Erfindung daher vorgesehen sein, dass das erste Rückstellelement und/oder das zweite Rückstellelement unter einer definierten Vorspannung steht/stehen.

In einer Ausführungsform der Vorrichtung gemäß der Erfindung kann das erste Rückstellelement ausgebildet sein, zwischen lateralen Führungsflächen des Belagschachts und der Bremsbelaghalterplatte zu wirken derart, dass die Bremsbelaghalterplatte an den lateralen Führungsflächen des Belagschachts gleitend abgestützt ist.

Vorzugsweise ist dieses Rückstellelement dabei als ein Federelement ausgebildet, das mittels zumindest eines Befestigungselements an der Bremsbelaghalterplatte derart angeordnet ist, dass das Federelement nur axiale Kräfte aufzunehmen vermag.

Mit anderen Worten, im Gegensatz zu den vorhergehend geschilderten Lösungen aus dem Stand der Technik, ist das Federelement so ausgebildet und so an der Bremsbelaghalterplatte angeordnet, dass es, bezogen auf die Achse der Bremsscheibe bzw. der Bewegungsrichtung der Bremsbelaghalterplatte, keine weiteren Kräfte in radialer und/oder tangentialer Richtung, d.h. quer zur Bremsscheibenachse, aufnehmen kann, die ansonsten einem einwandfreien, kontinuierlichen Rückstellen in Axialrichtung einen gewissen Widerstand entgegensetzen würden.

Das zumindest eine Befestigungselement kann ausgebildet sein, die Rückstellkraft einzustellen. Idealerweise ist das Federelement relativ zu dem zumindest einen Befestigungselement beweglich angeordnet, wobei das Maß der Beweglichkeit des Federelements gegenüber dem zumindest einen Befestigungselement die Rückstellkraft zumindest in Teilen mitbestimmt.

In einer bevorzugten Ausführungsform ist das Federelement als eine entsprechend gewundene und geschwungene Drahtfeder ausgebildet, die sich einerseits zwischen beiden Seiten der Bremsbelaghalterplatte erstreckt und andererseits so angeordnet ist, dass deren freien Enden sich, an den beiden Seiten der Bremsbelaghalterplatte anliegend, in Axialrichtung, d.h. in Richtung zu der Bremsscheibe, erstrecken. Die Drahtfeder kann eine den in solchen Scheibenbremsen üblicherweise auftretenden Kraftniveaus entsprechende Federstärke aufweisen.

Die Drahtfeder ist dabei auf der Außenseite der Bremsbelaghalterplatte, dem Bremsbelag gegenüberliegend, vorgesehen, wobei die Befestigungselemente als Klammern oder ähnlich konzipierte Mittel ausgebildet sein können, die mit der Rückseite der Bremsbelaghalterplatte verschraubt, vernietet oder anderweitig dort befestigt sind. Die Anordnung, Anzahl und Verteilung der Klammern ist dabei so gewählt, dass die Drahtfeder eine Axialkraft auf die Bremsbelaghalterplatte übertragen kann, aber im eingebauten Zustand keine Kräfte in radialer oder tangentialer Richtung, d.h. quer zur Radachse, aufnimmt. Des Weiteren ist die Anordnung der Klammern so gewählt, dass die gesamte Anordnung bestehend aus Bremsbelaghalterplatte und Bremsbelag mit der Drahtfeder ohne Weiteres in einen Standardschacht einer Scheibenbremse einsetzbar ist, ohne dass es irgendwelcher baulichen Veränderungen an dem Bremssattel und/oder dem Bremsträger bedarf. Insofern eignen sich die Vorrichtung gemäß der Erfindung sowie eine solche verwendende Bremsbelaghalterplatte insbesondere auch für Nachrüstungen von bestehenden Scheibenbremsen. Gegebenenfalls können die oberen Kanten der seitlichen Führungsflächen, der "Hörner" des Bremsträgers, geneigt sein, so dass sich der durch diese gebildete Bremsschacht aufweitet, um das anfängliche Einfügen der aus Bremsbelaghalterplatte, Bremsbelag und Drahtfeder bestehenden Einheit zu erleichtern.

Wie bereits erwähnt erstreckt sich die Drahtfeder über die gesamte Breite der Bremsbelaghalterplatte und ist so konzipiert, dass sie zwischen den seitlichen Wänden, den "Hörnern" des Bremsträgers wirkt. Hierfür ist die Drahtfeder gemäß der Erfindung vorgespannt und wird von den oben genannten Klammern in dieser vorgespannten Position gehalten. Wenn der Bremsbelag im Bremsträger montiert ist, gibt es zwischen den Klammern und der Drahtfeder keinen weiteren Kontakt. Diese Anordnung reduziert den Bedarf an hohen Toleranzen bei der Herstellung der Drahtfeder und ermöglicht gleichzeitig eine einfache Montage und den Austausch der Bremsbeläge.

Dadurch, dass sich die freien Enden der Drahtfeder in Axialrichtung zwischen der Bremsbelaghalterplatte und den Hörner des Bremsträgers erstrecken, kann die Reibung zwischen diesen signifikant erhöht werden. Das dort gewünschte Reibungsverhalten, was im Folgenden Einfluss auf die erzielbare Rückstellkraft hat, lässt sich gemäß der Erfindung gezielt über eine geeignete Auswahl der Reibpaarung, d.h. der Materialauswahl und Oberflächenbeschaffenheit der Drahtfeder, der in Kontakt mit der Schachtwand stehenden Länge der freien Enden und/oder der der Drahtfeder innenwohnenden Vorspannung festlegen.

Wenn die Bremse betätigt wird und die Bremsbeläge in Richtung Bremsscheibe gedrückt werden, kommt es zu einer Relativbewegung zwischen den Bremsbelaghalterplatten und den Hörnern des Trägers. Die dabei in Erscheinung tretende erhöhte Reibung zwischen den freien Enden der Drahtfedern und den Hörnern des Trägers bewirkt eine axiale Vorspannung in der Drahtfeder. Nach dem Lösen der Bremse stellt eine Rückstellfeder der Scheibenbremse die Zuspanneinrichtung in ihre ursprüngliche, eingefahrene Position zurück und ermöglicht es so dem Bremssattel, sich von der Bremsscheibe zu entfernen.

Gemäß der Erfindung unterstützt dann die in der Drahtfeder vorab als Folge des Bremshubs gespeicherte Energie sowohl die inneren als auch die äußeren Bremsbeläge dabei, dem Bremskolben bzw. dem Bremssattel in ihre jeweiligen ursprünglichen Positionen zu folgen, unter Berücksichtigung einer eventuellen Verschleißnachstellung.

Gemäß der Erfindung ist es möglich, durch das über die Anordnung und Dimensionierung der Drahtfeder, insbesondere der Länge der axial verlaufenden Enden, eine definierte axiale Vorspannung in dieses Federelement einzubringen, die gegen die Halteklammern wirkt und die es gestattet, die Rückstellkraft auf ein geeignetes, gewünschtes Niveau einzustellen.

Die Vorrichtung gemäß der Erfindung kann darüber hinaus noch ein zweites Rückstellelement aufweisen, das ebenfalls als ein Federelement ausgebildet ist derart, dass es zwischen der Bremsbelaghalterplatte und einem in Bezug auf den Bremssattel stationären Widerlager in Axialrichtung bewegbar, vorzugsweise zwischen diesen kippbar gelagert ist. Die bewegliche bzw. kippbare Anordnung ist dabei so konzipiert, dass hierdurch ein Rückstellmoment bzw. eine Rückstellkraft erzeugt wird, die ausgerichtet sind, den oberen Bereich der Bremsbelaghalterplatte zurückzustellen.

In einer bevorzugten Ausführungsform der Vorrichtung gemäß der Erfindung kann das Federelement durch eine Belagniederhalterfeder gebildet sein, die sowieso benötigt wird und bereits vorhanden ist, um den Bremsbelag im Belagschacht zu halten, und die an der Bremsbelaghalterplatte angeordnet ist und sich an einer Widerlagerplatte des Bremssattels abstützt.

Gemäß der Erfindung weist zur Erzeugung eines definierten Rückstellmoments die Belagniederhalterfeder gegenüber der Widerlagerplatte, also nach oben, eine definierte Folge von unterschiedlich geneigten Kontaktflächen auf.

Im Querschnitt gesehen kann das in der Regel als eine Blattfeder konzipierte Federelement bspw. aus drei verschiedenen Teilen bestehen: einer abgerundeten mittigen Fläche bzw. Kante, die normalerweise beim Lösen der Bremse mit dem Widerlager in Kontakt steht, und links und rechts davon äußeren geneigten, flachen Abschnitten, die nach einer bestimmten Kipp- oder Drehbewegung der Blattfeder mit dem Widerlager in Kontakt kommen.

Gemäß der Erfindung soll in einer Ausführungsform der Neigungswinkel der geneigten Kontaktflächen so gewählt sein, dass der Radius in Bezug auf eine Kippbewegung zumindest der Hälfte des Abstands zwischen der Oberseite der Bremsbelaghalterplatte und der Unterseite der Widerlagerplatte entspricht.

Demzufolge betrifft die Erfindung in einem weiteren Aspekt eine Belagniederhalterfeder für eine Bremsbelaghalterplatte für eine Scheibenbremse, die zwei Öffnungen aufweist, in die Nasen der Bremsbelaghalterplatte eingreifbar sind, um die Belagniederhalterfeder auf der Bremsbelaghalterplatte verliersicher zu befestigen, wobei sich zwischen den beiden Öffnungen eine Folge von Kontaktflächen erstreckt, mit denen die Belagniederhalterfeder an einem Widerlager der Scheibenbremse abstützbar ist, und wobei die Krümmungen der Kontaktflächen quer zu der Längserstreckung der Belagniederhalterfeder so gewählt sind, dass diese bei Bremshub zwischen dem Widerlager und der Bremsbelaghalterplatte kippbar ist.

Gemäß der Erfindung ist die Belagniederhalterfeder so geformt und ausgebildet, dass diese infolge einer Kippbewegung ein entgegen der Kipprichtung wirkendes Drehmoment definierter Größe auszubilden vermag.

In einem noch weiteren Aspekt der Erfindung soll das erste Rückstellelement und das zweite Rückstellelement hinsichtlich Anordnung und resultierender elastischer Verformung unter Berücksichtigung der Dimensionen und des Gewichts der aus Bremsbelag und Bremsbelaghalterplatte bestehenden Einheit so aufeinander abgestimmt sein, dass die jeweils resultierenden Rückstellkräfte und/oder Rückstellmomente im Wesentlichen gleich groß sind.

Mit anderen Worten, während das untere Rückstellelement (Drahtfeder) dazu dient, eine Rückstellkraft auf den unteren Abschnitt der Einheit auszuüben, dient das obere Rückstellelement (Belagniederhalterfeder) gleichzeitig dazu, nur auf den oberen Abschnitt ein Rückstellmoment bzw. eine sich daraus ergebende Rückstellkraft auszuüben, wobei gemäß der Erfindung beide resultierenden Rückstellkräfte über die jeweilige konstruktive Ausgestaltung der Rückstellelemente so abgestimmt sind, dass in Bezug auf die Rückstellbewegung eine gleichmäßige Kraftverteilung auf den Bremsbelag erreicht wird.

Die Erfindung betrifft darüber hinaus entsprechend ausgestaltete Bremsbelaghalterplatten sowie eine die erfindungsgemäße Vorrichtung implementierende Scheibenbremse.

Weitere Merkmale und Vorteile der Erfindung ergeben sich aus der nachfolgenden Beschreibung der anhand der beiliegenden Zeichnungen dargestellten Ausführungsbeispiele. Es zeigen:
Fig. 1 schematisch eine Rückansicht einer Bremsbelaghalterplatte mit einer montierten Drahtfeder in einer ersten Ausführungsform sowie im Vergleich dazu die Drahtfeder in einem nicht montierten Zustand;
Fig. 2 schematisch eine Rückansicht einer Bremsbelaghalterplatte mit einer montierten Drahtfeder in einer zweiten Ausführungsform sowie im Vergleich dazu die Drahtfeder in einem nicht montierten Zustand;
Fig. 3 die Bremsbelaghalterplatte und die Drahtfeder aus Fig. 2 in Draufsicht;
Fig. 4 eine perspektivische Ansicht mit in einem Bremsträger eingesetzten Bremsbelägen mit der Drahtfeder gemäß der zweiten Ausführungsform;
Fig. 5 eine Teilansicht im Querschnitt entlang A-A aus Fig. 2;
Fig. 6a eine perspektivische Ansicht eines oberen Rückstellelements;
Fig. 6b eine weitere perspektivische Ansicht des oberen Rückstellelements;
Fig. 6c ein Ansicht in Längsrichtung des Rückstellelements; und
Fig. 7a bis 7c eine schematische Folge von unterschiedlichen Schnittdarstellungen, die die Kippbewegung veranschaulichen.

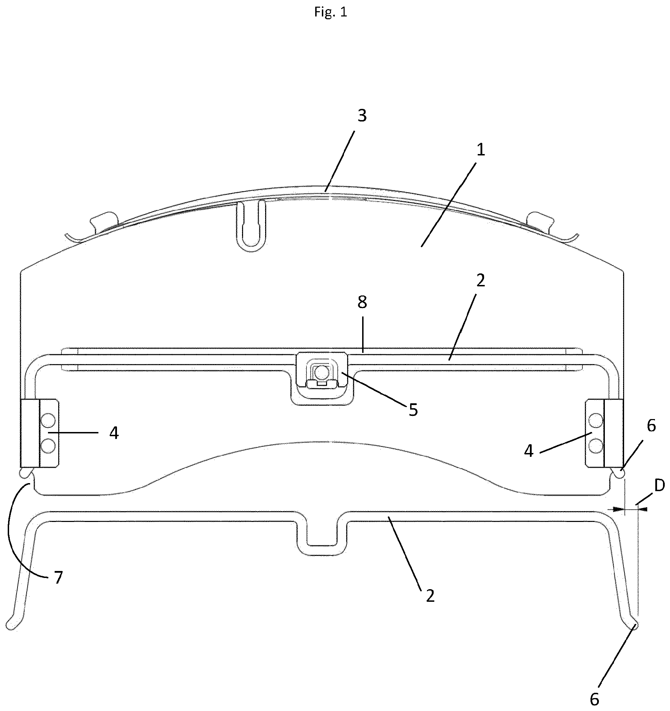

In der Fig. 1 ist exemplarisch eine Rückplatte oder eine Bremsbelaghalterplatte 1 von hinten gezeigt.

Die Bremsbelaghalterplatte 1 weist ein erstes Rückstellelement in der Form einer Drahtfeder 2 in einer ersten Ausführungsform und ein zweites Rückstellelement in der Form einer Belagniederhalterfeder 3 auf. Bei den Rückstellelementen 2 und 3 handelt es sich um jeweils eigenständige Bauteile.

Die Drahtfeder 2 ist entsprechend gebogen und erstreckt sich zwischen beiden seitlichen Enden der Bremsbelaghalterplatte **1.**

Die Drahtfeder 2 ist mit Hilfe von zwei seitlichen Befestigungsklammern 4 und einer mittigen Befestigungsklammer 5 an der Bremsbelaghalterplatte 1 angeordnet, wobei die Befestigungsklammern 4,5 mit der Rückseite bspw. vernietet sind.

Wie in den beiden Darstellungen der Fig. 1 zu erkennen ist, wird bei Montage die Drahtfeder 2 zu beiden Seiten um den Abstand D nach innen gezwungen, wobei die freien Enden 6 der Drahtfeder 2 dann in einer seitlichen Ausnehmung 7 der Bremsbelaghalterplatte 1 jeweils anliegen, und zwar derart, dass diese freien Enden 6 sich ausschließlich in Axialrichtung, d.h. der Richtung der Verschieblichkeit der Bremsbelaghalterplatte 1 bzw. der Richtung der Aufbringung der Zuspannkraft, erstrecken.

Aus Stabilitätsgründen kann die Rückseite der Bremsbelaghalterplatte 1 eine lineare Querführung 8 aufweisen, in der die querverlaufenden Abschnitte der Drahtfeder 2 unbeweglich eingefasst sind.

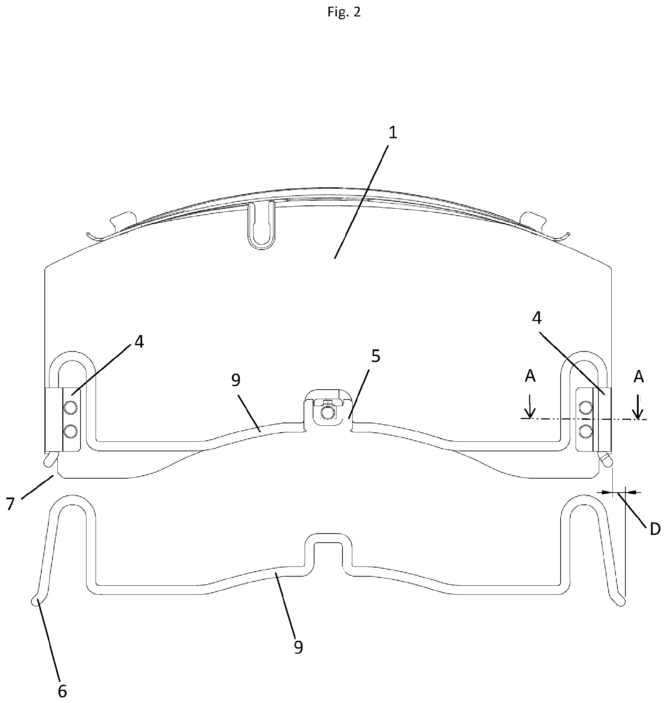

In den Figuren 2 bis 5 ist eine zweite Ausführungsform einer Drahtfeder 9 gezeigt.

Diese wird ebenfalls durch zwei seitliche Befestigungsklammern 4 und eine mittige Befestigungsklammer 5 an der Bremsbelaghalteplatte 1 für einen Bremsbelag 14 befestigt derart, dass zu beiden Seiten eine seitliche Stauchung um einen Versatz D erfolgt, wodurch eine Vorspannung in der Drahtfeder 9 aufgebaut wird. Die freien Enden 6 sind in den seitlichen Ausnehmungen 7 der Bremsbelaghalterplatte 1 aufgenommen.

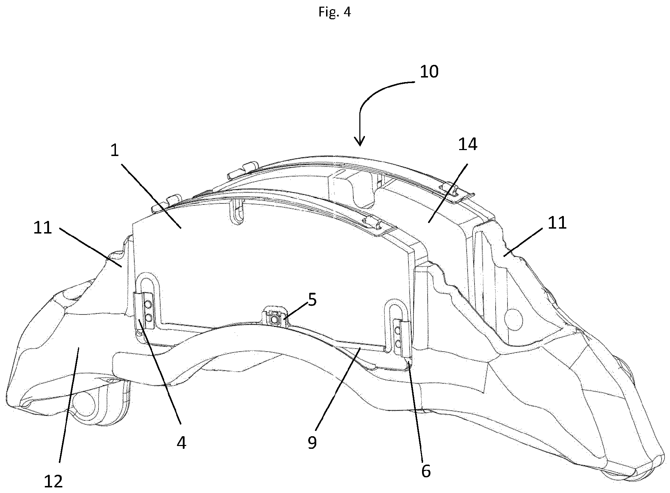

Ebenso wie bei der ersten Ausführungsform ermöglicht dies, wie die Fig. 4 zeigt, dass die Bremsbelaghalterplatte 1 zusammen mit der Drahtfeder 9 ohne Probleme in einen Belagschacht 10 einsetzbar ist, der u.a. durch die seitlichen Hörner 11 eines Bremsträgers 12 gebildet wird, der einen nicht gezeigten Gleitsattel verschieblich trägt. Zum Zweck eines leichteren Einfügens können sich die seitlichen Flächen bzw. Hörner 11 nach oben durch geneigte, gefaste oder abgerundete Flächen aufweiten, was schematisch durch die gestrichelten Linien angedeutet ist.

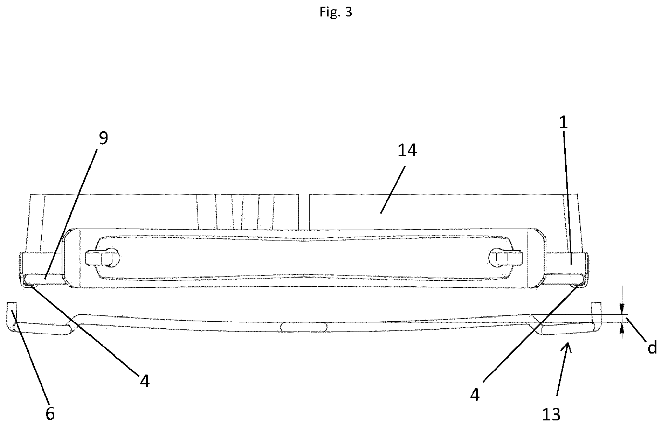

Die Drahtfeder 9 weist darüber hinaus, wie die Fig. 3 zeigt, von oben gesehen, eine solche Form auf, dass die seitlichen Bereiche 13 davon, die mit den seitlichen Befestigungsklammern 4 zusammenwirken, zu deren Mitte hin um einen Abstand d in Axialrichtung versetzt sind, wodurch sich bei Montage an der Rückplatte 1, nämlich durch die Befestigung über die mittige Klammer 5, ebenfalls eine Vorspannung in die Drahtfeder 9 einbringen lässt.

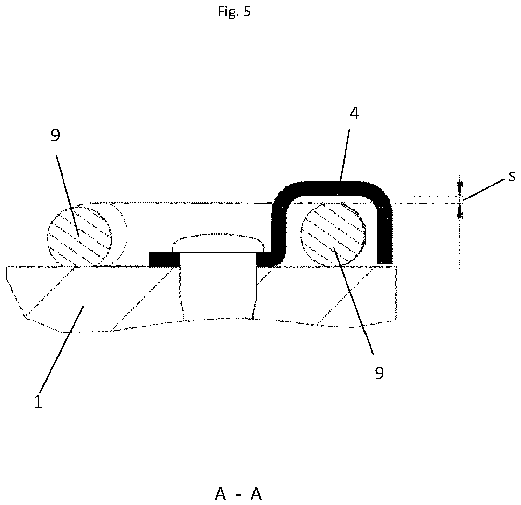

Des Weiteren führt die so gewählte Form mit dem Versatz d dazu, dass im montierten Zustand die Drahtfeder 9 nicht in Kontakt mit der Innenfläche der Klammer 4 steht, wie die Fig. 5 zeigt, sondern um einen Abstand s beabstandet ist, der eine Beweglichkeit bzw. elastische Verformbarkeit der Drahtfeder 9 in Axialrichtung ermöglicht.

Die Drahtfedern 2 und 9 dienen gemäß der Erfindung dazu, dass vorallem die Unterkante des Bremsbelags in eine Ausgangsposition zurück gebracht wird, wenn keine Bremskraft mehr auftritt. Es wird deutlich, dass infolge der Montage mit den seitlichen Halteklammern 4 eine Vorspannung in die Drahtfedern 2 und 9 induziert wird. Die freien Enden 6 sind zur Bremsscheibe hin gebogen, um die Reibung zwischen den Flächen der Hörner 11 des Trägers 12 und den Drahtfedern 2, 9 zu erhöhen.

Wenn die Bremse betätigt wird und die Bremsbeläge in Richtung der Bremsscheibe gedrückt werden, kommt es zu einer Relativbewegung zwischen der Bremsbelaghalterplatte 1 und den Hörnern 11 des Trägers 12. Die daraus resultierende erhöhte Reibung zwischen den freien Enden 6 der Drahtfedern 2, 9 und den Hörnern 11 des Trägers 12 bewirkt eine axiale Vorspannung in den Drahtfedern 2,9. Nach dem Lösen der Bremse zwingt eine Rückstellfeder der Scheibenbremse den Bremskolben in seine ursprüngliche, eingefahrene Position im Bremssattel zurück und ermöglicht es dem Bremssattel, sich von der Bremsscheibe zu entfernen. Die in den Drahtfedern 2,9 infolge der sowohl vorab festgelegten Vorspannung als auch der aus der Reibung resultierenden Gegen- bzw. Vorspannung gespeicherte Energie unterstützt dabei sowohl die inneren als auch die äußeren Bremsbeläge, dem Bremskolben und dem Bremssattel in ihre ursprüngliche Positionen zu folgen, abzüglich eines ggfs. erzeugten und zu kompensierenden Verschleißes.

Durch das Einbringen einer axialen Vorspannung in die Drahtfedern 2,9, die gegen die Halteklammern 4, 5 wirkt, ist es möglich, die Rückzugskraft auf ein geeignetes Niveau einzustellen. Hierbei lassen sich das Maß in Bezug auf die seitliche Stauchung D, die axiale Biegung d und die Beweglichkeit s der Drahtfedern 2, 9 relativ zu den Klammern 4,5 so festlegen, dass die Rückstellkraft gezielt eingestellt werden kann, insbesondere auch im Vergleich zu der Rückstellkraft des oberen Rückstellelements 3.

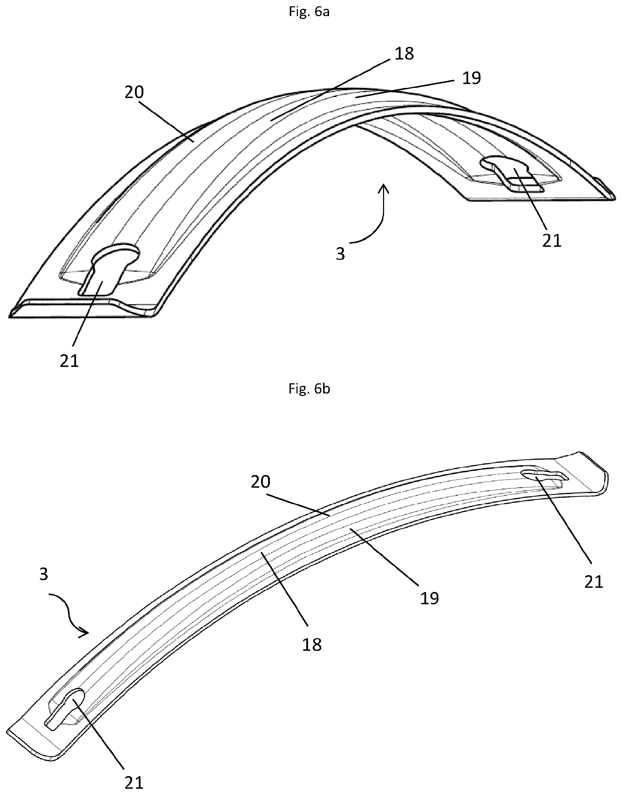

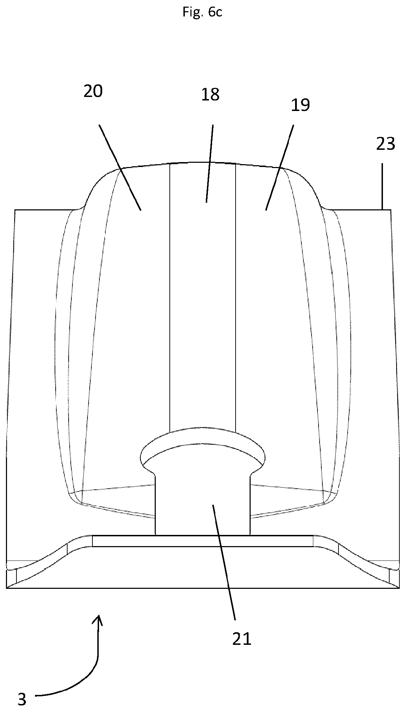

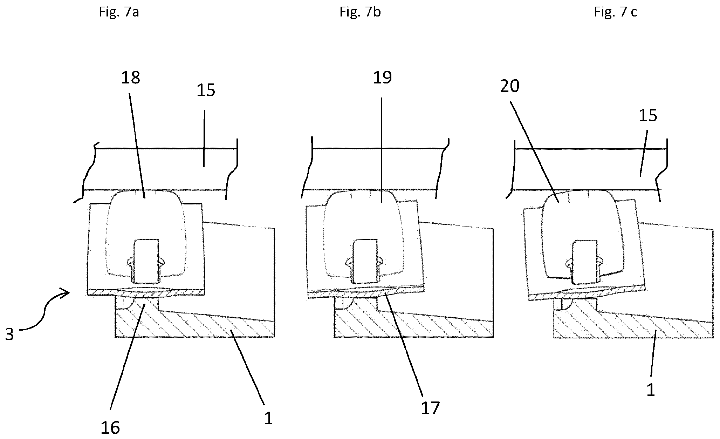

In den Figuren 6a bis 6c und 7a bis 7c ist ein oberes Rückstellelement 3 gemäß der Erfindung sowie dessen Funktionsweise gezeigt, wie dieses auf einer Bremsbelaghalterplatte 1 montierbar bzw. montiert ist.

Das obere Rückstellelement wird durch eine speziell ausgebildete Belagniederhalterfeder 3 gebildet, wie sie in bekannter Weise zwischen einem Widerlager 15 des Bremssattels und der Oberseite einer Bremsbelaghalterplatte 1 zum Einsatz kommt. Die nachfolgend geschilderte Ausgestaltung und Funktionsweise der Belagniederhalterfeder 3 besitzen eine eigenständige erfinderische Bedeutung.

Die Belagniederhalterfeder 3 weist zwei Öffnungen 21 auf, die der Aufnahme von Nasen 22 der Bremsbelaghalterplatte 1 dienen. Überlicherweise wird die Belagniederhalterfeder 3 zwischen dem Widerlager 15 und der Bremsbelaghalterplatte 1 eingespannt, um eine nach unten gerichtete Federhaltekraft auszuüben, so dass sich die Nasen 22 nicht aus den Öffnungen 21 bewegen können.

Gemäß der Erfindung ist die Belagniederhalterfeder 3 zwischen dem stationären Widerlager 15 des Bremssattels und einem Abschnitt 16 der Bremsbelaghalterplatte 1 kippbar gelagert. Im unteren Bereich weist die Feder 3 eine Wölbung 17 auf, die die Drehbeweglichkeit an diesem Punkt unterstützt, und zwar an den außenliegenden Rändern im Bereich der Öffnungen 21, wo die Belagniederhalterfeder 3 auf der Oberfläche 16 der Bremsbelaghalterplatte 1 tatsächlich aufliegt.

Zwischen den beiden Öffnungen 21 weist die Belagniederhalterfeder 3 eine Folge von sich längs erstreckenden, unterschiedlichen Kontaktflächen auf, mit denen diese sich an dem Widerlager 15 abstützt, eine mittige, leicht gebogene Kontaktfläche 18 und dazu geneigt abfallende seitliche Kontaktflächen 19 und 20.

Gemäß der Erfindung sind diese Kontaktflächen 18,19,20, die sich quasi nach außen wölben, um eine gekrümmte Kippfläche gegenüber dem Widerlager 15 zu bilden, so ausgebildet, dass sich ein definiertes Rückstellverhalten einstellen lässt, was bei Ende des Bremshubs zum Tragen kommt.

Das sich durch dieses Rückstellelement 3 ergebende Rückstellverhalten in Bezug auf die obere Kante bzw. den oberen Abschnitt soll in den Figuren 7a bis 7c durch die Folge von schematischen Schnittansichten näher veranschaulicht werden.

Die Fig. 7a zeigt die Feder 3 in einer Ruheposition, in der Fig. 7b in einer leicht geneigten Zwischenposition bei Beginn der Bremsbetätigung mit einem anfänglich geringfügig verschobenen Bremsbelag und in der Fig. 7c in einer Position mit einem vollständig erreichten Kippwinkel. Danach führt eine weitere Bewegung des Bremsbelags zu einem Gleiten bzw. Durchrutschen der Feder 3 unter der Widerlagerplatte 15.

Infolge der Kippbewegung entlang der Widerlagerplatte 15 erfolgt auch eine Stauchung des Federelements 3 in Richtung zu der Bremsbelaghalterplatte 1. Beim Kippen kommt letztendlich eine Folge von Kontaktpunkten bzw. -linien nacheinander mit der Unterseite der Widerlagerplatte 15 in Kontakt. Stauchung und Drehung des Federelements 3 erzeugen eine axiale Vorspannung über ein entgegenwirkendes Drehmoment, das exemplarisch in der Fig. 7c eingezeichnet ist.

Dieses Drehmoment unterstützt im Folgenden dann, sobald keine Zuspannkraft mehr ausgeübt wird und sich der Bremsbelag nicht weiter verschiebt, die Bremsbelaghalterplatte 1, insbesondere in Bezug auf den oberen Abschnitt, in ihre ursprüngliche Position zu bringen.

In einer besonderen Ausführungsform erweist sich ein solches Rückstellverhalten als effektiv, wenn ein Radius in Bezug auf die Kontaktpunkte mehr als die Hälfte des halben Abstandes in Bezug auf die Höhe zwischen der oberen Kontaktfläche zu der Widerlagerplatte 15 und der unteren Stützfläche zu dem Abschnitt 16 beträgt.

Des Weiteren weist das Federelement 3 noch seitliche flache Endflächen bzw. Kanten 23 zu beiden Seiten auf, die das Ausmaß der Kippbarkeit auf bestimmte Winkel begrenzen.

## Patentansprüche

1. Vorrichtung zur Abstützung und Führung einer Bremsbelaghalterplatte (1) und eines auf dieser angeordneten Bremsbelags (14) in einem Belagschacht (10) einer Scheibenbremse, mit einer mit der Bremsbelaghalterplatte (1) zusammenwirkenden Rückstelleinrichtung, die ausgebildet ist, bei einer infolge des Bremshubs vollführten Bewegung des Bremsbelags (14) in Axialrichtung eine Rückstellkraft zu erzeugen,
wobei die Rückstelleinrichtung aus einem ersten Rückstellelement (2;9), das ausgebildet und angeordnet ist, den unteren Bereich der Bremsbelaghalterplatte (1) zurückzustellen, und aus einem davon getrennten, zweiten Rückstellelement (3) besteht, das ausgebildet und angeordnet ist, den dem unteren Bereich gegenüberliegenden oberen Bereich der Bremsbelaghalterplatte (1) zurückzustellen,
**dadurch gekennzeichnet, dass**
- das erste Rückstellelement (2;9) als eine Drahtfeder ausgebildet ist, die mittels zumindest eines Befestigungselements (4;5) an der Außenseite der Bremsbelaghalterplatte (1) zwischen deren beiden Seiten verliersicher angeordnet ist derart, dass sich deren freien Enden (6), an den beiden Seiten der Bremsbelaghalterplatte (1) anliegend, in Axialrichtung erstrecken, und diese zwischen lateralen Führungsflächen (11) des Belagschachts (10) und der Bremsbelaghalterplatte (1) wirken derart, dass die Bremsbelaghalterplatte (1) an den lateralen Führungsflächen (11) des Belagschachts (10) gleitend abgestützt ist, und dass die Drahtfeder nur axiale Kräfte aufzunehmen vermag; und dass
- das zweite Rückstellelement (3) als eine Belagniederhalterfeder (3) ausgebildet ist, die an der Bremsbelaghalterplatte (1) angeordnet ist und sich an einer Widerlagerplatte (15) des Bremssattels abstützt, wobei die Belagniederhalterfeder (3) quer zu ihrer Längserstreckung eine definierte Folge von unterschiedlich geneigten Kontaktflächen (18,19,20) aufweist, deren Krümmungen so gewählt sind, dass diese bei Bremshub zwischen der Widerlagerplatte (15) und der Bremsbelaghalterplatte (1) kippbar ist, und die so ausgebildet sind, dass infolge der Kippbewegung ein entgegen der Kipprichtung wirkendes Rückstellmoment erzeugt wird.

2. Vorrichtung nach Anspruch 1, bei der das erste Rückstellelement (2;9) und/oder das zweite Rückstellelement (3) unter einer definierten Vorspannung steht/stehen.

3. Vorrichtung nach Anspruch 1 oder 2, bei der das zumindest eine Befestigungselement (4;5) ausgebildet ist, die Rückstellkraft einzustellen.

4. Vorrichtung nach Anspruch 3, bei der die Drahtfeder (2;9) relativ zu dem zumindest einen Befestigungselement (4;5) beweglich angeordnet ist.

5. Vorrichtung nach Anspruch 4, bei der das Maß der Beweglichkeit der Drahtfeder (2;9) gegenüber dem zumindest einen Befestigungselement (4;5) die Rückstellkraft zumindest in Teilen mitbestimmt.

6. Vorrichtung nach einem der Ansprüche 1 bis 5, bei der ein Neigungswinkel der geneigten Kontaktflächen (18,19,20) so gewählt ist, dass der Radius in Bezug auf eine Kippbewegung zumindest der Hälfte des Abstands zwischen der Oberseite (16) der Bremsbelaghalterplatte (1) und der Unterseite der Widerlagerplatte (15) entspricht.

7. Vorrichtung nach einem der vorhergehenden Ansprüche, bei der die Drahtfeder (2;9) und die Belagniederhalterfeder (3) hinsichtlich Anordnung und resultierender elastischer Verformung unter Berücksichtigung der Dimensionen und des Gewichts der aus Bremsbelag (14) und Bremsbelaghalterplatte (1) bestehenden Einheit so aufeinander abgestimmt sind, dass die jeweils resultierenden Rückstellkräfte und/oder Rückstellmomente im Wesentlichen gleich groß sind.

8. Scheibenbremse aufweisend eine Vorrichtung nach einem der Ansprüche 1 bis 7.

9. Bremsbelaghalterplatte (1) mit einem Bremsbelag (14) zur Anordnung und Führung in einem Bremsschacht (10) einer Scheibenbremse aufweisend ein Rückstellelement (2;9), das so ausgebildet und an der Bremsbelaghalterplatte (1) so angeordnet ist, dass der untere Bereich der Bremsbelaghalterplatte (1) rückstellbar ist,
**dadurch gekennzeichnet, dass**
- das Rückstellelement (2;9) als eine Drahtfeder ausgebildet ist, die mittels zumindest eines Befestigungselements (4;5) an der Außenseite der Bremsbelaghalterplatte (1) zwischen deren beiden Seiten verliersicher angeordnet ist derart, dass sich deren freien Enden (6), an den beiden Seiten der Bremsbelaghalterplatte (1) anliegend, in Axialrichtung erstrecken, und diese zwischen lateralen Führungsflächen (11) des Belagschachts (10) und der Bremsbelaghalterplatte (1) wirken derart, dass die Bremsbelaghalterplatte (1) an den lateralen Führungsflächen (11) des Belagschachts (10) gleitend abgestützt ist, und dass die Drahtfeder nur axiale Kräfte aufzunehmen vermag.

10. Bremsbelaghalterplatte nach Anspruch 9, bei der die Drahtfeder (2;9) unter einer definierten Vorspannung steht.

11. Bremsbelaghalterplatte nach Anspruch 9 oder 10, bei der die Drahtfeder (2;9) relativ zu dem zumindest einen Befestigungselement (4;5) beweglich angeordnet ist.

12. Bremsbelaghalterplatte (1) mit einem Bremsbelag (14) zur Anordnung und Führung in einem Bremsschacht (10) einer Scheibenbremse aufweisend ein Rückstellelement (3), das so ausgebildet und an der Bremsbelaghalterplatte (1) so angeordnet ist, dass der obere Bereich der Bremsbelaghalterplatte (1) rückstellbar ist,
**dadurch gekennzeichnet, dass**
das Rückstellelement als eine Belagniederhalterfeder (3) ausgebildet ist, die an der Bremsbelaghalterplatte (1) angeordnet ist und sich an einer Widerlagerplatte (15) des Bremssattels abstützt, wobei die Belagniederhalterfeder (3) quer zu ihrer Längserstreckung eine definierte Folge von unterschiedlich geneigten Kontaktflächen (18,19,20) aufweist, deren Krümmungen so gewählt sind, dass diese bei Bremshub zwischen der Widerlagerplatte (15) und der Bremsbelaghalterplatte (1) kippbar ist und die so ausgebildet sind, dass infolge der Kippbewegung ein entgegen der Kipprichtung wirkendes Rückstellmoment erzeugt wird.

13. Belagniederhalterfeder für eine Bremsbelaghalterplatte (1) für eine Scheibenbremse, die zwei Öffnungen (21) aufweist, in die Nasen (22) der Bremsbelaghalterplatte (1) eingreifbar sind, um die Belagniederhalterfeder auf der Bremsbelaghalterplatte (1) verliersicher zu befestigen, wobei sich zwischen den beiden Öffnungen (21) eine Folge von unterschiedlich geneigten Kontaktflächen (18,19,20) erstreckt, mit denen die Belagniederhalterfeder an einem stationären Widerlager der Scheibenbremse abstützbar ist, und wobei die Krümmungen der Kontaktflächen quer zu der Längserstreckung der Belagniederhalterfeder so gewählt sind, dass diese bei Bremshub zwischen dem Widerlager und der Bremsbelaghalterplatte kippbar ist.

14. Belagniederhalterfeder nach Anspruch 13, bei der diese ausgebildet ist, infolge einer Kippbewegung ein entgegen der Kipprichtung und gegenüber der Bremsbelaghalterplatte (1) wirkendes Drehmoment auszubilden.

15. Belagniederhalterfeder nach Anspruch 13 oder 14, bei der ein Neigungswinkel der geneigten Kontaktflächen (18,19,20) so gewählt ist, dass der Radius in Bezug auf eine Kippbewegung zumindest der Hälfte des Abstands zwischen einer Oberseite (16) der Bremsbelaghalterplatte (1) und der Unterseite des Widerlagers entspricht.

## Claims

1. A device for supporting and guiding a brake pad backplate (1) and a brake pad (14) arranged thereon in a pad slot (10) of a disc brake, having a restoring device which interacts with the brake pad backplate (11) and is designed to generate a restoring force when the brake pad (14) moves in an axial direction as a result of the a braking stroke,
wherein the restoring device comprises a first restoring element (2;9), which is designed and arranged to restore a lower region of the brake pad backplate (1), and a second restoring element (3) , which is separate therefrom and is designed and arranged to restore the an upper region of the brake pad backplate (1) opposite the lower region;
**characterized in that**
the first restoring element (2;9) is designed as a wire spring which is arranged on a rear side of the brake pad backplate (1) between its both sides by means of at least one fastening element (4;5) to prevent loss in such a way that free ends (6) of which, abutting against the two sides of the brake pad backplate (1), extend in the axial direction, and act between lateral guide surfaces (11) of the pad slot (10) and the brake pad backplate (1) in such a way that the brake pad backplate (1) is slidingly supported on the lateral guide surfaces of the pad slot (10), and that the wire spring is only able to absorb axial forces;
and that
the second restoring element (3) is designed as a pad hold-down spring (3) which is arranged on the brake pad backplate (11) and supported against an abutment plate (15) of a brake caliper, wherein the pad hold-down spring (3) transversely with respect to its longitudinal extent comprises a defined sequence of differently inclined contact surfaces (18, 19,2 0), curvatures of which being selected in such a way that the pad hold-down spring can be tilted between the abutment plate (15) and the brake pad backplate (1) during the braking stroke and which are configured such to produce a restoring torque acting in a direction opposite to a direction of tilt as a result of the tilting movement.

2. The device according to claim 1, in which the first restoring element (2; 9) and/or the second restoring element (3) is/are under a defined preload.

3. The device according to claim 1 or 2, in which the at least one fastening element (4; 5) is designed to adjust the restore force.

4. The device according to claim 3, in which the wire spring (2; 9) is arranged movably relative to the at least one fastening element (4; 5).

5. The device according to claim 4, in which the degree of mobility of the wire spring (2; 9) with respect to the at least one fastening element (4; 5) co-determines the restore force at least in part.

6. The device according to any one of claims 1 to 5, wherein an angle of inclination of the inclined contact surfaces (18, 19, 20) is selected such that the radius with respect to a tilting motion corresponds to at least half of the distance between the upper side (16) of the brake pad backplate (1) and the lower side of the abutment slab (15).

7. The device according to one of the preceding claims, in which the wire spring (2; 9) and the pad hold-down spring (3) are matched to one another with regard to arrangement and resulting elastic deformation, taking into account the dimensions and weight of the unit consisting of brake pad (14) and brake pad backplate (1), such that the respectively resulting restore forces and/or restore torques are essentially equal.

8. The disk brake comprising a device according to one of claims 1 to 7.

9. Brake pad backplate (1) with a brake pad (14) for arrangement and guidance in a brake slot (10) of a disc brake, having a restoring element (2; 9) which is designed and arranged on the brake pad backplate (1) in such a way that the lower region of the brake pad backplate (1) can be restore, **characterized in that**
- the restoring element (2; 9) is designed as a wire spring which is attached to the outside of the brake pad backplate (1) by means of at least one fastening element (4;5) on the outside of the brake pad backplate (1) between its two sides in a manner secure against loss in such a way that its free ends (6) extend in the axial direction in contact with the two sides of the brake pad backplate (1), and these act between lateral guiding surfaces (11) of the brake slot (10) and the brake pad backplate (1) in such a way that the brake pad backplate (1) is slidingly supported on the lateral guiding surfaces (11) of the brake slot (10), and that the wire spring is only able to absorb axial forces.

10. Brake pad backplate according to claim 9, in which the wire spring (2; 9) is under a defined preload.

11. Brake pad backplate according to claim 9 or 10, wherein the wire spring (2;9) is arranged movably relative to the at least one fastening element (4;5).

12. Brake pad backplate (1) with a brake pad (14) for arrangement and guidance in a brake shaft (10) of a disc brake, having a pad hold-down spring (3) which is designed and arranged on the brake pad backplate (1) in such a way that the upper region of the brake pad backplate (1) is restoretable, **characterized in that** the restoring element is designed as a pad hold-down spring (3) which is arranged on the brake pad backplate (1) and is supported on an abutment slab (15) of the brake caliper, wherein the pad hold-down spring (3) has a defined sequence of differently inclined contact surfaces (18, 19, 20) transverse to its longitudinal extension, the curvatures of which are selected such that it can be tilted between the abutment slab (15) and the brake pad backplate (1) during brake travel and which are designed such that a restoring torque acting counter to the tilting direction is generated as a result of the tilting motion.

13. Brake pad retaining spring for a brake pad backplate (1) for a disc brake, which has two openings (21) into which lugs (22) of the brake pad backplate (1) can engage in order to fasten the brake pad retaining spring on the brake pad backplate (1) secure against loss, a sequence of differently inclined contact surfaces (18, 19, 20) extending between the two openings (21), with which the pad hold-down spring can be supported on a stationary abutment of the disk brake, and wherein the curvatures of the contact surfaces are selected transversely to the longitudinal extension of the pad hold-down spring in such a way that the latter can be tilted between the abutment and the brake pad backplate during brake travel.

14. A pad hold-down spring according to claim 13, in which this is designed to form a torque acting counter to the tilting direction and with respect to the brake pad backplate (1) as a result of a tilting motion.

15. A pad hold-down spring according to claim 13 or 14, in which an angle of inclination of the inclined contact surfaces (18, 19, 20) is selected such that the radius in relation to a tilting motion corresponds to at least half the distance between an upper side (16) of the brake pad backplate (1) and the underside of the abutment.

## Revendications

1. Dispositif d'appui et de guidage d'une plaque de support de garniture de frein (1) et d'une garniture de frein agencée sur celle-ci (14) dans une cavité de garniture (10) d'un frein à disque, comprenant un dispositif de rappel, coopérant avec la plaque de support de garniture de frein (1), qui est réalisé pour générer une force de rappel lors d'un déplacement de la garniture de frein (14) dans une direction axiale effectué à la suite de la course de freinage,
dans lequel le dispositif de rappel est composé d'un premier élément de rappel (2 ; 9) qui est réalisé et agencé pour rappeler la zone inférieure de la plaque de support de garniture de frein (1), et un deuxième élément de rappel (3), séparé du premier, qui est réalisé et agencé pour rappeler la zone supérieure, opposée à la zone inférieure, de la plaque de support de garniture de frein (1),
**caractérisé en ce que**
- le premier élément de rappel (2 ; 9) est réalisé sous la forme d'un ressort en fil qui, au moyen d'au moins un élément de fixation (4 ; 5), est agencé de manière imperdable au niveau du côté extérieur de la plaque de support de garniture de frein (1) entre les deux côtés de celle-ci de telle sorte que ses extrémités libres (6), en appui contre les deux côtés de la plaque de support de garniture de frein (1), s'étendent dans une direction axiale, et qu'elles agissent entre des surfaces latérales de guidage (11) de la cavité de garniture (10) et de la plaque de support de garniture de frein (1) de telle sorte que la plaque de support de garniture de frein (1) est en appui de manière coulissante au niveau des surfaces latérales de guidage (11) de la cavité de garniture (10), et que le ressort en fil peut absorber uniquement des forces axiales ;
et **en ce que**
- le deuxième élément de rappel (3) est réalisé sous la forme d'un ressort de maintien de garniture (3) qui est agencé au niveau de la plaque de support de garniture de frein (1) et qui est en appui contre une plaque de butée (15) de l'étrier de frein, le ressort de maintien de garniture (3) présentant, transversalement à son prolongement longitudinal, une suite définie de surfaces de contact d'inclinaisons différentes (18, 19, 20) dont des courbures sont sélectionnées de manière à pouvoir reverser celui-ci, lors d'une course de freinage, entre la plaque de butée (15) et la plaque de support de garniture de frein (1), et qui sont réalisées de telle sorte qu'un couple de rappel est généré à la suite du mouvement de renversement à l'encontre de la direction de renversement.

2. Dispositif selon la revendication 1, dans lequel le premier élément de rappel (2 ; 9) et/ou le deuxième élément de rappel (3) se trouvent sous une précontrainte définie.

3. Dispositif selon la revendication 1 ou 2, dans lequel ledit au moins un élément de fixation (4 ; 5) est réalisé de manière à régler la force de rappel.

4. Dispositif selon la revendication 3, dans lequel le ressort en fil (2 ; 9) est agencé de manière déplaçable relativement audit au moins un élément de fixation (4 ; 5).

5. Dispositif selon la revendication 4, dans lequel l'ampleur du mouvement du ressort en fil (2 ; 9) par rapport audit au moins un élément de fixation (4 ; 5) détermine la force de rappel au moins en partie.

6. Dispositif selon l'une des revendications 1 à 5, dans lequel un angle d'inclinaison des surfaces de contacts inclinées (18, 19, 20) est sélectionné de telle sorte que le rayon, par rapport à un mouvement de renversement, correspond au moins à la moitié de la distance entre le côté supérieur (16) de la plaque de support de garniture de frein (1) et le côté inférieur de la plaque de butée (15).

7. Dispositif selon l'une des revendications précédentes, dans lequel le ressort en fil (2 ; 9) et le ressort de maintien de garniture (3), en termes d'agencement et de déformation élastique résultante, sont coordonnés en tenant compte des dimensions et du poids de l'unité constituée d'une garniture de frein (14) et d'une plaque de support de garniture de frein (1), de telle sorte que les forces de rappel et/ou couples de rappel résultants respectivement sont sensiblement égaux.

8. Frein à disque présentant un dispositif selon l'une des revendications 1 à 7.

9. Plaque de support de garniture de frein (1) comprenant une garniture de frein (14) destinée à être agencée et guidée dans une cavité de frein (10) d'un frein à disque, présentant un élément de rappel (2 ; 9) qui est réalisé et agencé au niveau de la plaque de support de garniture de frein (1) de telle sorte que la zone inférieure de la plaque de support de garniture de frein (1) peut être rappelée,
**caractérisée en ce que**
- l'élément de rappel (2 ; 9) est réalisé sous la forme d'un ressort en fil qui, au moyen d'au moins un élément de fixation (4 ; 5), est agencé de manière imperdable au niveau du côté extérieur de la plaque de support de garniture de frein (1) entre les deux côtés de celle-ci de telle sorte que ses extrémités libres (6), en appui contre les deux côtés de la plaque de support de garniture de frein (1), s'étendent dans une direction axiale, et qu'elles agissent entre des surfaces latérales de guidage (11) de la cavité de garniture (10) et de la plaque de support de garniture de frein (1) de telle sorte que la plaque de support de garniture de frein (1) est en appui de manière coulissante au niveau des surfaces latérales de guidage (11) de la cavité de garniture (10), et que le ressort en fil peut absorber uniquement des forces axiales.

10. Plaque de support de garniture de frein selon la revendication 9, dans laquelle le ressort en fil (2 ; 9) se trouve sous une précontrainte définie.

11. Plaque de support de garniture de frein selon la revendication 9 ou 10, dans laquelle le ressort en fil (2 ; 9) est agencé de manière déplaçable relativement audit au moins un élément de fixation (4 ; 5).

12. Plaque de support de garniture de frein (1) comprenant une garniture de frein (14) destinée à être agencée et guidée dans une cavité de frein (10) d'un frein à disque, présentant un élément de rappel (3) qui est réalisé et agencé au niveau de la plaque de support de garniture de frein (1) de telle sorte que la zone supérieure de la plaque de support de garniture de frein (1) peut être rappelée,
**caractérisée en ce que**
l'élément de rappel est réalisé sous la forme d'un ressort de maintien de garniture (3) qui est agencé au niveau de la plaque de support de garniture de frein (1) et qui est en appui contre une plaque de butée (15) de l'étrier de frein, le ressort de maintien de garniture (3) présentant, transversalement à son prolongement longitudinal, une suite définie de surfaces de contact d'inclinaisons différentes (18, 19, 20) dont des courbures sont sélectionnées de manière à pouvoir reverser celui-ci, lors d'une course de freinage, entre la plaque de butée (15) et la plaque de support de garniture de frein (1), et qui sont réalisées de telle sorte qu'un couple de rappel est généré à la suite du mouvement de renversement à l'encontre de la direction de renversement.

13. Ressort de maintien de garniture pour une plaque de support de garniture de frein (1) pour un frein à disque qui présente deux ouvertures (21) dans lesquelles des becs (22) de la plaque de support de garniture de frein (1) peuvent s'engager afin de fixer de manière imperdable le ressort de maintien de garniture sur la plaque de support de garniture de frein (1), dans lequel, entre les deux ouvertures (21), s'étend une suite de surfaces de contact d'inclinaisons différentes (18, 19, 20) au moyen desquelles le ressort de maintien de garniture est en appui contre une butée du frein à disque, et dans lequel les courbures des surfaces de contact sont sélectionnées transversalement au prolongement longitudinal du ressort de maintien de garniture de telle sorte qu'il peut être renversé, lors d'une course de freinage, entre la butée et la plaque de support de garniture de frein.

14. Ressort de maintien de garniture selon la revendication 13, dans lequel celui-ci est conçu pour réaliser, à la suite d'un mouvement de renversement, un couple agissant à l'encontre de la direction de renversement et par rapport à la plaque de support de garniture de frein (1).

15. Ressort de maintien de garniture selon la revendication 13 ou 14, dans lequel un angle d'inclinaison des surfaces de contacts inclinées (18, 19, 20) est sélectionné de telle sorte que le rayon, par rapport à un mouvement de renversement, correspond au moins à la moitié de la distance entre un côté supérieur (16) de la plaque de support de garniture de frein (1) et le côté inférieur de butée.
